# EUROPEAN PATENT SPECIFICATION

(11) **EP 3 593 967 B1**
(45) Date of publication and mention of the grant of the patent: **01.06.2022**
(21) Application number: 18763821.8
(22) Date of filing: 09.03.2018
(51) Int. Cl.: B27M 1/00, B32B 1/04, B32B 33/00, E04F 15/04

(54) **DECORATIVE MATERIAL**
DEKORATIVES MATERIAL
MATÉRIAU DÉCORATIF

(30) Priority: 09.03.2017 JP 2017045348
(43) Date of publication of application: 15.01.2020
(73) Proprietor: Dai Nippon Printing Co., Ltd., Tokyo 162-8001 (JP)
(72) Inventor: DOI, Koji, Tokyo 162-8001 (JP); SHIMIZU, Masafumi, Tokyo 162-8001 (JP); YAMADA, Takashi, Tsushima-shi Aichi 496-0016 (JP)
(74) Representative: Müller-Boré & Partner Patentanwälte PartG mbB
(86) International application number: PCT/JP2018/009292
(87) International publication number: WO 2018/164272

(56) References cited:
- JP-A- 2015 017 427
- JP-A- 2016 160 590
- JP-U- 3 144 641
- US-A1- 2008 148 674
- US-A1- 2008 168 737
- US-A1- 2015 191 917
- US-A1- 2017 037 645

## Description

### TECHNICAL FIELD

The present invention relates to a decorative material.

### BACKGROUND ART

Conventional decorative materials such as flooring materials and wall surface panels have protrusions and depressions on their side faces. They are designed such that a protrusion on a side face of one decorative material fits to a depression on a side face of another decorative material (see, for example, Patent Literature 1).

Those decorative materials such as flooring materials and wall surface panels become dirty in daily life and are thus routinely cleaned.

However, it is often the case that dirt is likely to accumulate in a very small gap in a boundary (hereinafter, also referred to as a joint) between one decorative material and another decorative material, and the dirt accumulated inside the joint is difficult to remove. Further prior art can be found in US2008/168737A which discloses the preamble of claim 1.

### CITATION LIST

### - Patent Literature

Patent Literature 1: JP 2016-160590 A

### SUMMARY OF INVENTION

### - Technical Problem

The present invention aims to provide a decorative material that has a protruded tongue and a depressed groove and can ideally prevent dirt accumulation in a fit boundary (joint) between the tongue of one decorative material and the groove of another decorative material.

### - Solution to Problem

As a result of intensive studies to solve the problem, the present inventors found that decorative materials capable of ideally preventing dirt accumulation can be created by including a substrate layer that is processed into a tongue/groove configuration (called "hon-zane" in Japanese) so that a tongue and a groove are formed within the prescribed ranges of distance from the upper face of the substrate layer. Accordingly, the present invention was completed.

The tongue and groove called "sane (zane)" usually refer to a protrusion and a groove-like depression having shapes fitting to each other. For example, this structure is formed on side faces of wooden substrates of floors or wall panels.

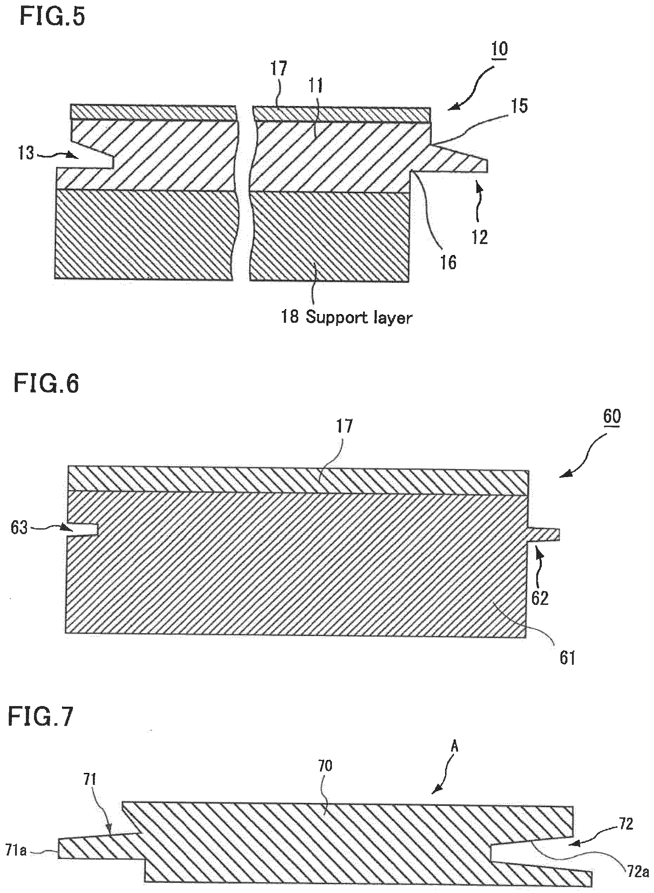

The tongue/groove configuration is usually like the configuration of a substrate layer 70 illustrated in Fig. 7. The substrate layer 70 has a protrusion 71a (tongue 71) on a side face thereof and a groove-like depression 72a (groove 72) which has a shape fittable to the protrusion 71a.

When the groove-like depression 72a in the groove 72 of one decorative material A is fit to the protrusion 71a in the tongue 71 of adjacent another decorative material A (substrate layer 70), the two decorative materials A are arranged side by side.

The invention is set out in the appended set of claims.

In the decorative material of the present invention, the substrate layer is preferably a single layer.

The substrate layer has a thickness of preferably 5.0 mm or less, more preferably 2.0 mm or more but less than 3.0 mm.

The tongue has a thickness of preferably 0.5 mm or more at its end.

The thickness of the tongue at its end is preferably not less than 30% but not more than 90% of the thickness at its base.

In the decorative material of the present invention, both the upper face and the opposing lower face of the tongue are inclined, and the angle of inclination of the upper face is larger than the angle of inclination of the lower face.

The decorative material preferably includes a decorated layer on the upper face side of the substrate layer. The decorated layer is preferably a decorative sheet.

The decorative material may include a support layer on the back side of the substrate layer.

### - Advantageous Effects of Invention

Floors, wall surface panels, etc., produced using the decorative material of the present invention have shallow joints between one decorative material and another, and are less susceptible to dirt accumulation and are easy to clean.

### BRIEF DESCRIPTION OF DRAWINGS

Fig. 1(a) illustrates a schematic plan view of a preferred exemplary decorative material of the present invention. Fig. 1(b) illustrates a schematic cross-sectional view of the decorative material of the present invention. Figs. 1(c) and 1(d) each illustrate a schematic plan view of another preferred exemplary decorative material of the present invention. Fig. 1(e) illustrates a cross-sectional view of an exemplary state where the decorative materials of the present invention are fit together.
Figs. 2(a) to 2(d) each illustrate a schematic cross-sectional view of a protruded tongue in the decorative material of the present invention.
Figs. 3(a) to 3(d) each illustrate a schematic cross-sectional view of a protruded tongue in the decorative material of the present invention.
Fig. 4(a) illustrates a schematic cross-sectional view of a preferred exemplary decorative material of the present invention. Fig. 4(b) illustrates a schematic diagram of a preferred cross section of a decorative sheet.
Fig. 5 illustrates a schematic cross-sectional view of a preferred exemplary decorative material of the present invention.
Fig. 6 illustrates a schematic cross-sectional view of a decorative material in Example 1.
Fig. 7 illustrates a cross-sectional view of an exemplary tongue/groove configuration.

### DESCRIPTION OF EMBODIMENTS

The decorative material of the present invention includes a polygonal substrate layer.

The decorative material of the present invention including such a substrate layer is also polygonal. The polygonal shape is not limited and may specifically be triangle, rectangle, pentagon, or the like viewed from the above.

In the decorative material of the present invention, the substrate layer has a protruded tongue at least on its one side face and a depressed groove at least on one of the other side faces. The groove has a shape fittable to the tongue.

Specifically, in the decorative material of the present invention, a tongue is formed on at least one side face of the polygonal substrate layer, and a groove that has a shape fittable to the tongue is formed on at least one of the other side faces of the polygonal substrate layer.

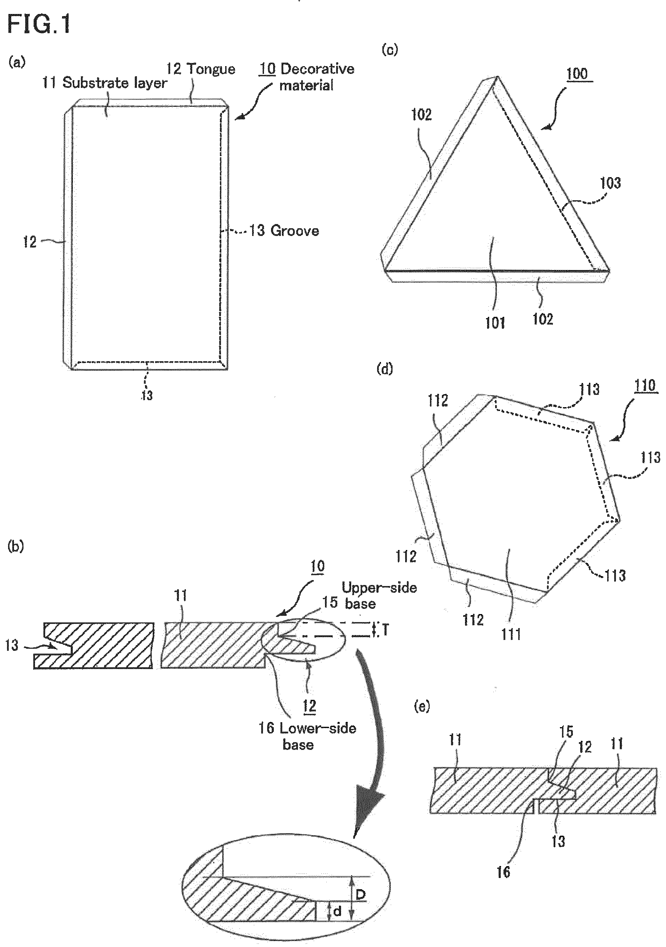

Examples of embodiments of the decorative material of the present invention include the embodiment illustrated in Fig. 1.

Fig. 1(a) illustrates a schematic plan view of a preferred exemplary decorative material of the present invention. Fig. 1(b) illustrates a schematic cross-sectional view of the decorative material of the present invention. Figs. 1(c) and 1(d) each illustrate a schematic plan view of another preferred exemplary decorative material of the present invention. Fig. 1(e) illustrates a cross-sectional view of an exemplary state where the decorative materials of the present invention are fit together.

As illustrated in Fig. 1, a decorative material 10 (100, 110) of the present invention includes a substrate layer 11 (101, 111) having a protruded tongue 12 (102, 112) on its one side face and a depressed groove 13 (103, 113) on one of the other side faces.

In the decorative material of the present invention 10 (100, 110), the tongue 12 (102, 112) and the groove 13 (103, 113) have shapes fittable to each other.

In the decorative material of the present invention 10, as illustrated in Fig. 1(b), the tongue 12 has a lower-side base 16 and an upper-side base 15 that is located external to the lower-side base 16. The upper-side base 15 and the lower-side base 16 may be located such that a line connecting them is orthogonal to the horizontal face. Alternatively, the lower-side base 16 may be located external to the upper-side base 15. Preferably, the upper-side base 15 is located external to the lower-side base 16. The tongue 12 with such a shape can excellently fit to a groove 13 of another decorative material 10 as illustrated in Fig. 1(e) even when the groove 13 is not in contact with the lower-side base 16 of the other decorative material. Specifically, when the decorative material of the present invention 10 is constructed on a base material, a gap is formed on its lower side. The gap can accept foreign substances such as dirt which remain on the base material without being eliminated. Thus, the construction can be carried out even if some foreign substances are present.

### (Substrate layer)

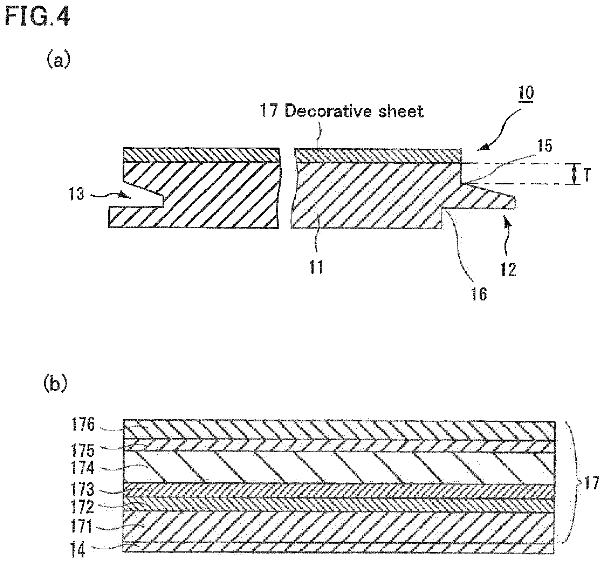

The substrate layer has been processed into a tongue/groove configuration to have a protruded tongue and a depressed groove on its sides. The substrate layer mainly imparts shape stability, water resistance, moisture proof, impact resistance, and scratch resistance to the decorative material of the present invention. As illustrated in Fig. 1 (b) and Fig. 4 described later, the substrate layer 11 has a distance T of 2.0 mm or less from its upper face to the upper-side base 15 of the tongue. When the distance T is more than 2.0 mm, floor faces or wall faces, for example, produced by bonding the decorative materials of the present invention have deep joints where dirt easily accumulates, and the appearance is deteriorated. The distance T from the upper face to the upper-side base of the tongue is more preferably 1.5 mm or less. A large distance between the upper face of the substrate layer and the upper-side base 15 causes shadow, making the gap more notable. Thus, the distance T between the upper face and the upper-side base of the tongue is 2.0 mm or less, still more preferably 1.5 mm or less, thereby effectively preventing the problem of notable gap.

The substrate layer preferably has a thickness of 5.0 mm or less. When the substrate layer has a thickness of 5.0 mm or less, dirt accumulation can be excellently suppressed, and good groove appearance can be achieved. Furthermore, such a thickness can reduce stress-induced warpage due to difference in elongation derived from temperatures, etc. between the substrate layer and other layers such as a support layer described below.

The substrate layer is preferably thinner than the support layer to reduce stress-induced warpage due to difference in elongation derived from moisture, etc. between the substrate layer and other layers such as a support layer.

The substrate layer more preferably has a thickness of not less than 2.0 mm but less than 3.0 mm.

In the decorative material of the present invention, the tongue is preferably thicker at its base than at its end as illustrated in Fig. 1 (b). With a tongue in such a shape, even an extremely thin substrate layer can have a sufficiently strong tongue.

The tongue having such a shape preferably has a thickness of 0.5 mm or more at its end. When the tongue has a thickness of 0.5 mm or more at its end, the cracking or chipping of the tongue base is less likely to occur during production of the decorative material, or cracking or chipping of the tongue end is less likely to occur during fitting the decorative materials one another for construction.

Preferably, the thickness of the tongue at its end is not less than 30% but not more than 90% of the thickness at its base. Specifically, as illustrated in Fig. 1(b), the thickness ratio calculated from (d/D) × 100, where the end thickness is denoted by d and the base thickness is denoted by D, is preferably not less than 30% but not more than 90%. When the thickness ratio is less than 30%, the base thickness is so great that the tongue is difficult to form in a thin substrate layer, or the end of the tongue is so thin that it may be easily cracked. When the thickness ratio is more than 90%, the cross-sectional shape of the tongue is substantially rectangular. A tongue with such a shape is difficult to fit to a groove of another decorative material, and thus cracking is more likely to occur. The lower limit of the thickness ratio is more preferably 40%, and the upper limit is more preferably 80%.

With regard to the tongue having different thicknesses at its base and end, the upper face of the tongue is inclined. In the case where the upper face of the tongue satisfying the above-mentioned thickness difference and the thickness ratio is inclined, the angle of inclination can be made greater than the case where both the upper face and the opposing lower face are inclined at the same angle. Thus, the tongue is easier to fit to a groove and has higher resistance to cracking.

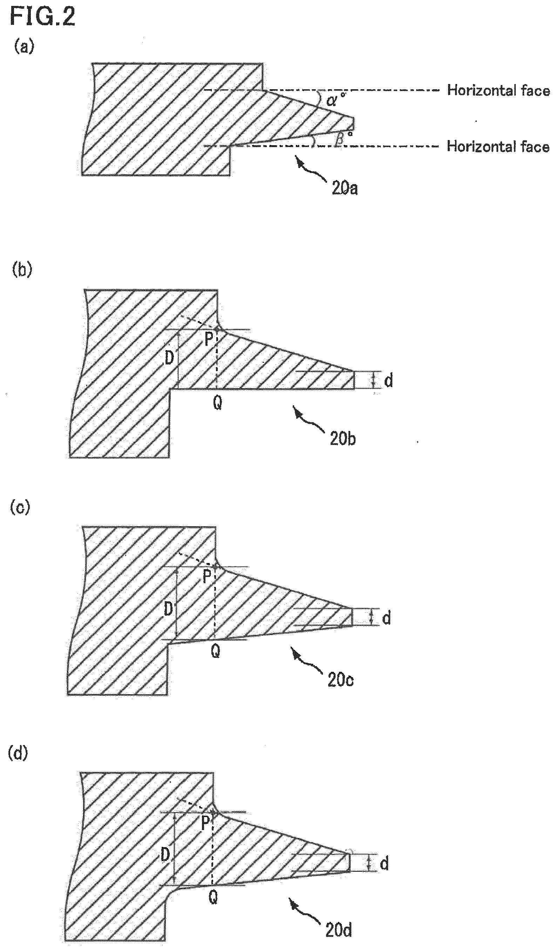

The term "angle of inclination" herein refers to the angle formed between the horizon and the upper face or the lower face in a cross section of the tongue in a direction parallel to the thickness direction of the substrate layer. The angle of inclination of the upper face and the angle of inclination of the lower face respectively refer to the angle α° and the angle β° to the horizon as in a protruded tongue 20a illustrated in Fig. 2(a).

In the decorative material of the present invention in which both the upper face and the opposing lower face of the tongue are inclined, the angle of inclination of the upper face is larger than the angle of inclination of the lower face. When the upper face of the tongue is inclined at a larger angle, the tongue is easier to fit to a groove of another decorative material. The expression "the angle of inclination of the upper face is larger than the angle of inclination of the lower face" means that the absolute value of the angle of inclination (α°) of the upper face to the horizon and the absolute value of the angle of inclination (β°) of the lower face to the horizon in a cross section of the tongue satisfy |α°| > |β°|.

The angle β° of the lower face of the tongue to the horizon is preferably within the range of 0°± 2°. When the lower face of the tongue is inclined at an angle outside the range, the end of the tongue may be so thin and may be easily cracked. The expression "0° ± 2°" means that the angle of inclination of the lower face of the tongue to the horizon is not smaller than -2° but not larger than 2°.

The boundary between the upper-side base or the lower-side base of the tongue and a side face of the substrate layer may be unclear. For example, the upper-side bases of the tongue 20b and tongue 20c in Fig. 2(b) and Fig. 2(c), respectively, are rounded. The upper-side base and the lower-side base of the tongue 20d in Fig. 2(d) are rounded. The thickness D of the base of the tongue and the "angle of inclination" are determined as follows.

Specifically, in either of the tongues, a line extended from a flat portion of the upper face of the tongue is crossed with a line extended from a flat portion of the upper side face of the substrate layer at a point defined as an intersection P, and the intersection P is determined as the upper-side base of the tongue. A line perpendicular to the horizon is drawn from the intersection P to the lower face of the tongue, and the point at which the perpendicular line crosses the lower face of the tongue or the point at which the perpendicular line crosses a line extended from a flat portion of the lower face of the tongue is determined as an intersection Q. The distance between P and Q is determined as a thickness D of the tongue at its base. The angle formed by the horizontal face including the intersection P with the flat upper face of the tongue is determined as the above-mentioned "α°". The angle formed by the horizontal face including the intersection Q and the flat lower face of the tongue is determined as the above-mentioned "β°".

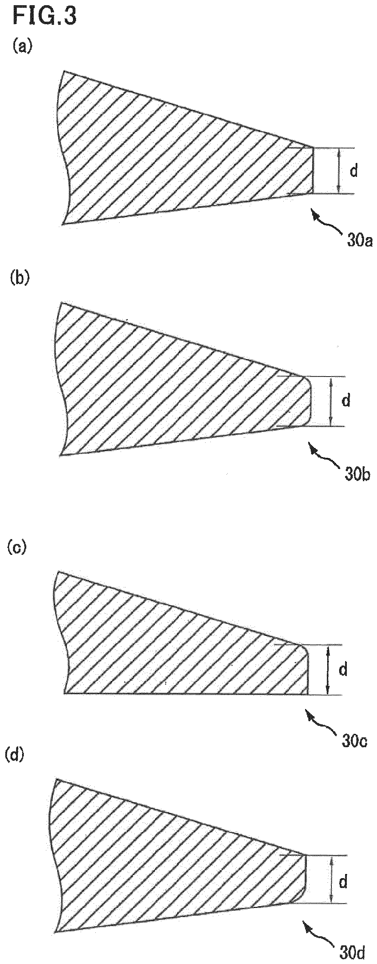

In the case of a tongue having a clear boundary between its upper face and lower face and its end, like the end 30a of the tongue illustrated in Fig. 3(a), the length of the boundary is determined as a thickness d of the end. In the case of a tongue having an unclear boundary between its upper face and lower face and its end, like the end 30b illustrated in Fig. 3(b), the distance between the point (inflection point) from which the upper face is not flat and the point (inflection point) from which the lower face is not flat is determined as a thickness d of the end. In the case of a tongue having an unclear boundary between one of its upper face or lower face and its end, like the end 30c and the end 30d illustrated in Fig. 3(c) and Fig. 3(d), respectively, the distance from the inflection point determined as described for Fig. 3(b) to the boundary between the upper face or lower face and the end is determined as a thickness d of the end.

The raw material of the substrate layer is not limited. Examples include thermoplastic resins, thermosetting resins, wooden materials, and metallic materials. Thermoplastic resins and thermosetting resins are less likely to crack or chip. However, during machining of the resins, burrs or the like may be formed and need to be dealt with the blade and machining conditions. Wooden materials are easy to machine but are likely to crack or chip depending on the shape (thickness). Taking such properties of materials into consideration, the material may be selected as needed.

The substrate layer preferably contains a thermoplastic resin.

Preferred examples of the thermoplastic resin include: homopolymers or copolymers of thermoplastic resins, including polyvinyl resin such as poly(vinyl chloride) resin, poly(vinyl acetate) resin, or poly(vinyl alcohol) resin; polyolefin resin such as polyethylene, polypropylene, polystyrene, ethylene-vinyl acetate copolymer resin (EVA), or ethylene-(meth)acrylic acid resin; polyester resin such as polyethylene terephthalate resin (PET resin); acrylic resin; polycarbonate resin; polyurethane resin; acrylonitrile-butadiene-styrene copolymers (ABS resin); and acrylonitrile-styrene copolymers, and mixture of those resins. Preferred among these are polyolefin resin, acrylonitrile-butadiene-styrene copolymers (ABS resin), and poly(vinyl chloride) resin. In the case where a tenoner, router, or cutter is used to form a protrusion and a depression, or cutting, groove formation, or rounding is performed by machining, the thermoplastic resin is most preferably polypropylene or ABS resin.

Preferred examples of the thermosetting resin include epoxy resin, phenolic resin, urea resin, unsaturated polyester resin, melamine resin, alkyd resin, polyimide resin, silicone resin, hydroxy-functional acrylic resin, carboxy-functional acrylic resin, amide-functional copolymers, and urethane resin.

The thermosetting resin may preferably be a two-component curable resin, specifically such as a two-component curable resin of a polyol and an isocyanate.

Preferred examples of the polyol include acrylic polyols, polyester polyols, and epoxy polyols.

The isocyanate is any multivalent isocyanate having two or more isocyanate groups per molecule. Examples include polyisocyanates, such as aromatic isocyanates, e.g., 2,4-tolylene diisocyanate (TDI), xylene diisocyanate (XDI), naphthalene diisocyanate, and 4,4'-diphenylmethane diisocyanate, and aliphatic (or alicyclyc) isocyanates, e.g., 1,6-hexamethylene diisocyanate (HMDI), isophorone diisocyanate (IPDI), methylene diisocyanate (MDI), hydrogenated tolylene diisocyanate, and hydrogenated diphenylmethane diisocyanate. Adducts or oligomers of these isocyanates, such as adducts of tolylene diisocyanate or tolylene diisocyanate trimers may also be used.

The wooden material may be any of a plyboard (including LVL), a medium-density fiber plate (MDF), a high-density fiber plate (HDF), a particle board, a single plate, a lumber, or a laminated lumber, or a stacked lumber prepared by appropriately stacking those materials.

Examples of the metallic material include iron, aluminum, and copper.

The substrate layer in the present invention preferably contains an inorganic compound. Incorporation of an inorganic compound can reduce the coefficient of linear expansion of the substrate layer. Thus, the warpage or cutting during machining of the decorative material of the present invention can be further improved.

Examples of the inorganic compound include talc, calcium carbonate, silica, and mica. Talc is suitably used because it is a filler that does not excessively increase the material hardness and can reduce the contraction ratio.

The amount of the inorganic compound per 100 parts by mass of the resin component in the substrate layer is preferably not less than 10 parts by mass but not more than 70 parts by mass. When the amount is less than 10 parts by mass, the coefficient of linear expansion of the substrate layer may not be sufficiently reduced. When the amount is more than 70 parts by mass, the substrate layer may have an insufficient tensile modulus. The amount of the inorganic compound is more preferably within the range of 10 to 65 parts by mass.

The substrate layer may consist of one layer or may be a laminate of two or more layers. Preferably, the substrate layer is a laminate of two or more layers, and at least one of the layers contains a glass component. Specifically, the substrate layer is preferably a laminate of two or more layers, and at least one of the layers is a thermoplastic resin layer and one of the other layers is a glass component layer containing a glass component. Such a substrate layer has excellent impact resistance and improved shape stability.

Preferred examples of the glass component layer containing a glass component include layers formed of glass fibers.

In the present invention, the substrate layer is preferably a single layer. A single substrate layer leads to good machinability in forming tongues and grooves. The substrate layer is also preferably a laminate in which thermoplastic resin layers and glass component layers are alternately stacked. In particular, the substrate layer is preferably a laminate in which a first thermoplastic resin layer, a glass component layer, and a second thermoplastic resin layer are stacked in the stated order.

In the case where the substrate layer includes multiple thermoplastic resin layers, the resins in the layers may be the same as or different from one another. The thicknesses of the multiple thermoplastic resin layers may be the same as or different from one another.

### (Support layer)

As illustrated in Fig. 5, the decorative material of the present invention may include a support layer 18 on the back side of the substrate layer 11.

The support layer not only functions as a floor foundation but also serves for thermal insulation or weight saving depending on the material design thereof. Nonlimiting examples of the material of the support layer include the thermoplastic resins, thermosetting resins, wooden materials, and metallic materials described above for the substrate layer.

The thickness of the support layer may be appropriately selected according to the intended use but is preferably 15 mm or less.

The support layer may consist of one layer or may be a laminate of two or more layers.

### (Decorated layer)

The decorative material of the present invention preferably includes a decorated layer on the upper face side of the substrate layer.

The decorated layer imparts decorativeness to the decorative material of the present invention. The decorative layer may be formed on the substrate layer by direct printing with various pattern inks or by transcription or the like of patterns. Alternatively, the decorative layer may be formed by stacking a thinly sliced wooden veneer or sawn plate. In addition, a coating film layer may be provided to protect the surface of the pattern, or a coating film layer may be directly provided on the substrate layer. More preferably, the decorated layer is a decorative sheet, and as illustrated in Fig. 4(a), a decorative sheet 17 is provided on the surface of the substrate layer 11.

The decorative sheet 17 is not limited. An exemplary preferred embodiment of the decorative sheet 17 includes at least a picture pattern layer 172, an adhesive layer 173, a transparent resin layer 174, and a surface-protecting layer 176 on a substrate sheet 171, with the surface-protecting layer 176 being the outermost layer, as illustrated in Fig. 4(b). The outermost layer of the decorative sheet may be provided with depression-protrusion patterns by embossing. Fig. 4(a) and Fig. 4(b) each illustrate a schematic cross-sectional view of a preferred exemplary decorative material of the present invention.

An exemplary decorative sheet illustrated in Fig. 4 is described below.

The decorative sheet includes a picture pattern layer (picture layer), an adhesive layer, a transparent resin layer, and a surface-protecting layer which are sequentially stacked on one face of a substrate sheet. A backer layer is stacked via a back-face primer layer on the other side of the substrate sheet.

### «Substrate sheet»

A picture pattern layer etc. are sequentially stacked on the surface (front surface) of the substrate sheet.

The substrate sheet is suitably formed using, for example, a thermoplastic resin. Specific examples include poly(vinyl chloride), polyethylene terephthalate, polybutylene terephthalate, polyamide, polyethylene, polypropylene, polycarbonate, polyethylene naphthalate, ethylene-vinyl acetate copolymers, ethylene-acrylic acid copolymers, ethylene-acrylate copolymers, ionomers, acrylic acid esters, and (meth)acrylic acid esters. Polyolefins such as polypropylene are preferred among these.

The substrate sheet may be colored. For coloring, a colorant (pigment or dye) may be added to the above-mentioned thermoplastic resin. Examples of usable colorants include inorganic pigments, such as titanium dioxide, carbon black, and iron oxide; organic pigments, such as phthalocyanine blue; and various dyes. One or two or more known or commercially available colorants may be selected. The amount of the colorants may be determined based on the desired color, etc.

The substrate sheet may contain, as needed, various kinds of additives, such as fillers, matting agents, foaming agents, flame retardants, lubricants, antistatic agents, antioxidants, ultraviolet absorbers, and light stabilizers.

The thickness of the substrate sheet can be appropriately determined based on the purpose of use, application method, etc., of the final product. In general, the substrate sheet preferably has a thickness of not less than 30 µm but not more than 250 µm.

The surface (front surface) of the substrate sheet may be subjected to a corona discharge treatment in order to enhance the adhesiveness of inks forming the picture pattern layer. The corona discharge treatment may be performed by a method and under conditions according to known methods. The back surface of the substrate sheet may be subjected to a corona discharge treatment, or may be provided with a back-face primer layer, a backer layer, or the like, as needed.

### ≪Picture pattern layer (picture layer)≫

The picture layer imparts a desired picture (design) to the decorative sheet 17, and the kind etc. of the picture is not limited. Examples include wood grain patterns, marble grain patterns, pebbly patterns, tiled patterns, brick-masonry patterns, textile patterns, leather patterns, geometric figures, characters, symbols, and abstraction patterns.

The method of forming the picture layer is not limited. For example, the picture layer may be formed on the front surface of a substrate sheet by a printing method using ink obtained by dissolving (or dispersing) a known colorant (dye or pigment) together with a binding resin in a solvent (or a dispersion medium).

Examples of the colorant include inorganic pigments, such as carbon black, titanium white, zinc oxide, red iron oxide, Prussian blue, and cadmium red; organic pigments, such as azo pigments, lake pigments, anthraquinone pigments, quinacridone pigments, phthalocyanine pigments, isoindolinone pigments, and dioxazine pigments; metallic powder pigments, such as aluminum powder and bronze powder; pearlescent pigments, such as titanium oxide-coated mica and bismuth chloride oxide; fluorescent pigments; and noctilucent pigments. These colorants may be used singly or in a combination of two or more. These colorants may further contain a filler such as silica, an extender pigment such as organic beads, a neutralizer, a surfactant, or the like.

Examples of the binding resin include polyester-based urethane resins and hydrophilized polyester-based urethane resins. These resins can be used in combination with polyesters, polyacrylates, polyvinyl acetate, polybutadiene, polyvinyl chloride, chlorinated polypropylene, polyethylene, polystyrene, polystyrene-acrylate copolymers, rosin derivatives, alcohol adducts of styrene-maleic anhydride copolymers, or cellulose-based resins, for example.

Specific examples of the binding resin include polyurethane-polyacrylic-based resins, polyacrylamide-based resins, poly(meth)acrylate-based resins, polyethylene oxide-based resins, polyvinylpyrrolidone-based resins, water-soluble polyester-based resins, water-soluble polyamide-based resins, water-soluble amino-based resins, water-soluble phenolic resins, and other water-soluble synthetic resins; and water-soluble natural polymers, such as polynucleotides, polypeptides, and polysaccharides. Other examples include natural rubber, synthetic rubber, polyvinyl acetate-based resins, (meth)acrylic acid based-resins, polyvinyl chloride-based resins, modified or mixed polyurethane-polyacrylic acid-based resins, and other resins. These binding resins may be used singly or in a combination of two or more.

Examples of printing methods for forming the picture layer include gravure printing, offset printing, screen printing, flexo printing, electrostatic printing, and ink jet printing. When a solid picture pattern layer (also referred to as a color-concealing layer) is formed over the entire surface, various coating methods, such as gravure coating, reverse gravure coating, roll coating, knife coating, air knife coating, dye coating, lip coating, comma coating, kiss coating, flow coating, and dip coating can be employed.

In addition to the above methods, examples also include hand-drawing methods, marbling methods, photographic methods, transfer methods, laser beam drawing methods, electron beam drawing methods, metal partial deposition methods, and etching methods. Such methods may be used in combination with other methods.

The thickness of the picture layer is not limited, and can be appropriately set depending on the characteristics of the product. The layer thickness may be about not less than 0.1 µm but not more than 10 µm.

### «Adhesive layer»

The adhesive layer may be appropriately provided between the picture layer and a transparent resin layer. The adhesive contained in the adhesive layer may be suitably selected according to, for example, the components of the picture layer or the transparent resin layer. For example, various adhesives containing polyurethane-based resins, polyacrylic resins, polycarbonate-based resins, epoxy-based resins, or the like can be used. Not only reaction-curable adhesives but also hot melt adhesives, ionizing radiation-curable adhesives, and ultraviolet-curable adhesives are usable.

The adhesive layer may be transparent or translucent, as long as the picture layer can be recognized.

In the present invention, an adhesive surface may be subjected to a known easy-adhesion treatment, such as corona discharge treatment, plasma treatment, degreasing treatment, or surface roughening treatment, as needed.

The adhesive layer can be formed, for example, by applying an adhesive on the picture pattern layer, drying once, and then laminating a transparent resin. The adhesive may be applied by any method, for example, by roll coating, curtain flow coating, wire bar coating, reverse coating, gravure coating, reverse gravure coating, air knife coating, kiss coating, blade coating, smooth coating, comma coating, or the like.

The thickness of the adhesive layer varies depending on, for example, the kinds of transparent protecting layer and adhesive used. The thickness may usually be about not less than 0.1 µm but not more than 30 µm.

### ≪Transparent resin layer≫

The transparent resin layer may be colored as long as it is transparent, or may be translucent so far as the picture pattern layer can be visually recognized.

Examples of the resin include polyvinyl chloride, polyethylene terephthalate, polybutylene terephthalate, polyamide, polyethylene, polypropylene, ethylene-vinyl acetate copolymers, ethylene-acrylic acid copolymers, ethylene-acrylate copolymers, ionomers, polymethylpentene, acrylic acid esters, methacrylic acid esters, polycarbonate, and cellulose triacetate. Among these, polyolefin-based resins such as polypropylene are preferred, and polyolefin-based resins having stereoregularity are more preferred. When polyolefin-based resins are used, desirably the transparent resin layer is formed by extruding a molten polyolefin-based resin.

The transparent resin layer may contain additives such as fillers, matting agents, foaming agents, flame retardants, lubricants, antistatic agents, antioxidants, ultraviolet absorbers, light stabilizers, radical scavengers, and soft components (e.g., rubber), as needed.

The thickness of the transparent resin layer is not limited and may usually be about not less than 10 µm but not more than 400 µm.

### ≪Primer layer≫

A primer layer may be provided on the transparent resin layer. The primer layer can be formed by applying a known primer agent on the surface of the transparent resin layer. Examples of the primer agent include urethane resin-based primer agents including acrylic-modified urethane resin (acrylic urethane-based resin); primer agents including urethane-cellulose-based resins (for example, resin containing a urethane-nitrocellulose mixture and hexamethylene diisocyanate); and resin-based primer agents including acryl-urethane block copolymers. The primer agent may contain additives as needed. Examples of the additives include fillers such as calcium carbonate and clay, flame retardants such as magnesium hydroxide, antioxidants, lubricants, foaming agents, ultraviolet absorbers, and light stabilizers. The amount of the additive may be appropriately set depending on the characteristics of the product.

The application amount of the primer agent is not limited and is usually about not less than 0.1 µm but not more than 100 µm.

### ≪Surface-protecting layer≫

A surface-protecting layer is formed on the transparent resin layer. The surface-protecting layer preferably contains an ionizing radiation-curable resin or a two-component curable urethane-based resin as a resin component, although this is not limitative. Preferably, the surface-protecting layer is substantially formed of the resin. When a transparent surface-protecting layer is formed using an ionizing radiation-curable resin or a two-component curable urethane-based resin, the abrasion resistance, impact resistance, stain resistance, scratch resistance, weather resistance, etc., of the decorative sheet can be easily enhanced. In the present invention, the outermost layer is preferably an ionizing radiation-curable resin layer among others.

The ionizing radiation-curable resin is not limited. Examples include transparent resins containing, as a main component, a prepolymer (including an oligomer) and/or a monomer containing, in the molecule, a radically polymerizable double bond that can undergo a crosslinking polymerization reaction by ionizing radiation, such as irradiation of ultraviolet rays or electron beams. These prepolymers or monomers can be used singly or in a combination of two or more. The curing reaction is usually a crosslinking curing reaction.

Specific examples of the prepolymers or monomers include compounds that contain, in the molecule, a radically polymerizable unsaturated group, such as a (meth)acryloyl group or a (meth)acryloyloxy group; and a cation-polymerizable functional group, such as an epoxy group. Polyene/thiol-based prepolymers including polyene and polythiol in combination are also preferred. Herein, a (meth)acryloyl group means an acryloyl group or a methacryloyl group.

Examples of prepolymers including a radically polymerizable unsaturated group include polyester (meth)acrylate, urethane (meth)acrylate, epoxy (meth)acrylate, melamine (meth)acrylate, triazine (meth)acrylate, and silicone (meth)acrylate. Preferably, the prepolymer has a molecular weight of about not less than 250 but not more than 100,000.

Examples of monomers including a radically polymerizable unsaturated group include monofunctional monomers, such as methyl (meth)acrylate, 2-ethylhexyl (meth)acrylate, and phenoxyethyl (meth)acrylate. Examples of multifunctional monomers include diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, and dipentaerythritol hexa(meth)acrylate.

Examples of prepolymers including a cation-polymerizable functional group include prepolymers of epoxy-based resins, such as bisphenol-type epoxy resins and novolac-type epoxy compounds; and prepolymers of vinyl ether-based resins, such as fatty acid-based vinyl ethers and aromatic vinyl ethers. Examples of thiols include polythiols, such as trimethylolpropane trithioglycolate and pentaerythritol tetrathioglycolate. Examples of polyenes include polyurethanes from diol and diisocyanate in each of which allyl alcohol is added to each end thereof.

Electromagnetic waves or charged particles having energy high enough to cause the curing reaction of molecules of ionizing radiation-curable resin (composition) are used as the ionizing radiation to cure the ionizing radiation-curable resin. Ultraviolet rays or electron beams may usually be used. Visible light, X-rays, ionic rays, or the like may also be used.

Examples of ultraviolet ray sources include light sources, such as ultra-high-pressure mercury lamps, high-pressure mercury lamps, low-pressure mercury lamps, carbon arc lamps, black lights, and metal halide lamps. Usually, the ultraviolet rays preferably have a wavelength of not less than 190 nm but not more than 380 nm.

Examples of electron beam sources include various electron beam accelerators, such as Cockcroft-Walton accelerators, Van de Graaff accelerators, resonance transformer accelerators, insulation-core-transformer-type accelerators, linear accelerators, dynamitron accelerators, and high-frequency accelerators. Among these, electron beam sources capable of emitting electrons having an energy of not lower than 100 keV but not higher than 1000 keV, preferably not lower than 100 keV but not higher than 300 keV are preferred.

The two-component curable urethane-based resins are not limited. Examples of usable resins include those including a polyol component (e.g., acrylic polyol, polyester polyol, polyether polyol, epoxy polyol) having an OH group as a main component, and an isocyanate component (e.g., tolylene diisocyanate, hexamethylene diisocyanate, metaxylene diisocyanate) as a curing agent component.

The transparent surface-protecting layer may contain, as needed, plasticizers, stabilizers, fillers, dispersants, or colorants such as dyes or pigments.

The transparent surface-protecting layer can be formed, for example, by applying an ionizing radiation-curable resin or a two-component curable urethane-based resin to a transparent polypropyelene resin layer by a known coating method, such as gravure coating or roll coating, and then curing the resin. When an ionizing radiation-curable resin is used, the resin is cured by irradiation of ultraviolet rays or electron beams.

The thickness of the transparent surface-protecting layer is not limited, and can be appropriately set depending on the characteristics of the product. The thickness is usually about not less than 0.1 µm but not more than 50.0 µm, preferably about not less than 1 µm but not more than 20 µm.

### ≪Back-face primer layer≫

A back-face primer layer may be provided on the back face (face opposite to the face on which the picture pattern layer is stacked) of the substrate sheet as needed for, for example, increasing the adhesion to the adherend.

The back-face primer layer can be formed by applying a known primer agent on the substrate sheet. Examples of the primer agent include urethane resin-based primer agents including acrylic-modified urethane resin (acrylic urethane-based resin); primer agents including urethane-cellulose-based resins (for example, resin containing a urethane-nitrocellulose mixture and hexamethylene diisocyanate; and resin-based primer agents including acrylic-urethane block copolymers. The primer agent may contain additives as needed. Examples of the additives include fillers such as calcium carbonate and clay, flame retardants such as magnesium hydroxide, antioxidants, lubricants, foaming agents, ultraviolet absorbers, and light stabilizers. The amount of the additive may be appropriately set depending on the characteristics of the product.

The thickness of the back-face primer layer is not limited and is usually about not less than 0.01 µm but not more than 20.00 µm.

### ≪ Embossing≫

The decorative sheet intermediate may be embossed from the transparent surface-protecting layer side.

The embossing is performed to impart a desired texture, such as wood grain patterns, to the decorative sheet. For example, after the transparent protecting layer is softened by heating, the softened transparent protecting layer is pressed and shaped by using an embossing plate having a desired depression-protrusion pattern, and the transparent protecting layer is then solidified by cooling to provide a texture. The embossing may be performed using a known sheet-fed embossing machine or rotary embossing machine.

Examples of the depression-protrusion patterns applied by embossing include wood-grain vessel patterns, bosses (depression-protrusion patterns of stood-out annual rings), hairline patterns, grain patterns, and satin patterns.

When embossing is performed, the depression formed by embossing may be filled with ink by wiping as needed. For example, ink is put into the embossed depression while plowing the surface with a doctor blade. Usually, ink containing a two-component curable urethane resin as a binder can be used as the ink to be put in (wiping ink).

In particular, when a wood-grain vessel depression-protrusion pattern is treated by wiping, a design closer to actual wood grain can be attained, thus increasing the value of the product.

In the present invention, the transparent surface-protecting layer may contain other components. For example, additives such as solvents, ultraviolet absorbers, antioxidants, dispersants, light stabilizers, gloss-controlling agents, antiblocking agents, or lubricants may be contained.

### ≪Backer layer≫

The decorative sheet 17 may include what is called a "backer layer" (synthetic resin layer) on the back side of the substrate sheet. The backer layer may optionally be included as a part of the decorative sheet 17 and is a relatively thick synthetic resin layer to impart shock-absorbing properties to the decorative sheet 17.

The synthetic resin layer preferably contains a polyolefin-based resin as a resin component.

Examples of the polyolefin-based resin include polyethylene (high-density polyethylene, medium-density polyethylene, low-density polyethylene), and polypropylene. These resins can be used singly or in a combination of two or more. In particular, polypropylene is preferred among these. Examples of the polypropylene include homopolypropylene, random polypropylene, and block polypropylene. In particular, homopolypropylene is desirably used among these.

Resin components other than the polyolefin-based resin may be used as a resin component of the synthetic resin layer. Examples of other resin components include vinyl chloride resin, polystyrene, polyamide resin, polyimide resin, polyamideimide resin, fluororesin, urethane resin, polysulfone, polycarbonate, polyacetal, polyphenylene ether, methacrylic resin, acrylonitrile-styrene resin, acrylonitrile-butadiene-styrene resin, polyethylene naphthalate (PEN), polyethylene terephthalate (PET), polybutylene terephthalate (PBT), polyarylate, amorphous polyethylene terephthalate (a.k.a. A-PET) (a product of Mitsubishi Chemical Corporation: Novaclear (trade name)), and a polyethylene terephthalate copolymers (PETG). A-PET is particularly preferred among these. Preferably, A-PET is used with PEN to give heat resistance.

The amount of the polyolefin-based resin in the synthetic resin layer is preferably not less than 90% by weight but not more than 100% by weight, more preferably not less than 95% by weight but not more than 100% by weight.

The synthetic resin layer may be formed by applying a resin composition containing the resin component, etc., to the substrate sheet by, for example, calendering, inflation, T-die extrusion, or the like. Alternatively, a commercial film may be used as the synthetic resin layer.

The thickness of the synthetic resin layer is not limited and is usually not less than 50 µm but not more than 210 µm, preferably about not less than 100 µm but not more than 200 µm.

The decorative material of the present invention including the above-described layers is ideally used for housing materials, such as window sides of bay windows, flooring materials, in particular water sections such as toilets, washing stands, and kitchens, and additionally wall surface panels or ceiling materials. The thickness of the decorative material of the present invention is preferably not less than 2.5 mm but not more than 25 mm, more preferably not less than 5 mm but not more than 20 mm, still more preferably not less than 8 mm but not more than 15 mm.

For the use as a flooring material, the decorative material preferably has the same thickness as a wooden flooring material used at places other than water sections, such as living rooms or corridors. The thickness of wooden flooring materials is usually 8 mm, 12 mm, or 15 mm, typically 12 mm.

The thickness of the decorative material of the present invention is adjusted to the above-mentioned thickness preferably by controlling the thickness of the support layer appropriately.

### [Production method of decorative material]

The decorative material of the present invention can be produced through the following procedure, for example.

A decorated layer is formed by directly applying various ink compositions to the substrate layer.

The ink compositions may be applied by, for example, gravure printing, offset printing, screen printing, flexo printing, or ink jet printing. A concealing layer (solid print layer) may be formed by, for example, gravure coating, bar coating, roll coating, reverse roll coating, or comma coating.

The decorated layer may be formed on the substrate layer by transcription, etc.

Alternatively, the decorative layer may be formed by stacking a thinly sliced wooden veneer or sawn plate using an adhesive. The adhesive may be a two-component curable urethane or vinyl acetate resin or a PUR-type moisture-curable resin. The adhesive can be applied to form an adhesive layer in the same manner as the formation of the decorative layer using the ink compositions.

Moreover, a coating film layer may be provided to protect the surface of the directly-formed patterns, veneer plates, or sawn plates, or may be directly provided on the substrate layer. The decorative sheet is formed on the surface of the substrate layer directly or by interposing an adhesive. Details of the adhesive are as described concerning the attachment of the veneer plates or sawn plates. A direct attachment may be performed by, for example, lamination with heat, namely thermal lamination.

### (Attachment of support layer to substrate layer)

The support layer (resin foam) can be attached to the substrate layer with a decorative layer formed thereon using an adhesive such as heat sensitive adhesive, pressure sensitive adhesive, or hot-melt adhesive. Preferred examples of the hot-melt adhesive include reactive hot-melt adhesives such as urethane-reactive hot-melt adhesives (hereinafter, also referred to as PUR). PUR contains a functional group (isocyanate group) reactable with moisture. After curing by cooling, the adhesive reacts with the moisture on or given through the substrate or the decorative sheet.

After the reaction, the adhesive does not melt if heated and has high adhesion strength.

The support layer is thus formed on the entire surface of one face of the substrate layer. Thereafter, a tongue is formed on at least one of the side faces of the polygonal substrate layer with the support layer formed thereon, and a groove that has a shape fittable to the tongue is formed on at least one of the other side faces of the polygonal substrate layer.

The tongue and groove may be formed by any method such as a conventionally known method.

In the formation of the tongue and groove, the substrate layer is machined so that the tongue and groove are inclined at the above-mentioned predetermined angles.

The decorative material of the present invention can be produced by the method including a step of forming a support layer on the entire surface of one face of a substrate layer, a step of forming a tongue and a groove, and a step of machining the support layer under the tongue and the groove.

The decorative material of the present invention has the specific tongue and groove in the substrate layer. Floor, etc. formed with such decorative materials have shallow joints between one decorative material and another, and are less susceptible to dirt accumulation and are easy to clean.

Such a decorative material of the present invention is ideally used for housing materials, such as flooring materials, window sides of bay windows, wall faces, or ceilings.

### EXAMPLES

The present invention will be described in detail with reference to examples, but the present invention is by no means limited by the examples.

### (Evaluation and measurement method)

The decorative materials prepared in examples and comparative examples were evaluated and measured by the methods described below.

### (Dirt accumulation)

A tongue of one decorative material was fit to a groove of another decorative material. The fit part (joint) and the surrounding thereof were sprinkled with 5 g of gypsum powder. The gypsum powder was prepared by curing powder putty (available from Yayoi Chemical Industry Co., Ltd., Wide Super 60) and scraping the cured putty with a #180 file. The powder was wiped off with a 100% cotton cloth to evaluate the wiped site based on the following criteria. The results of ++ or higher were considered acceptable.
+++: Almost all the gypsum powder was removed.
++: A very small amount of the gypsum powder remained.
+: The gypsum powder partly remained.
-: The gypsum powder noticeably remained.

### (Fittability of protrusion and depression)

The fittability upon engaging a tongue of one decorative material with a groove of another decorative material was evaluated based on the following criteria. The results of + or higher were considered acceptable.
+++: The two decorative materials were fit together by lightly tapping the ends of them with a hand. The decorative materials did not separate when one of them was pulled while holding the other. The boundary did not stand out.
++: The decorative materials were fit together by striking the ends of them with a wooden hammer. The decorative materials moved together when one of them was pulled while holding the other. The boundary slightly stood out.
+: The decorative materials were fit together by hardly striking the ends of them with a wooden hammer. The decorative materials moved together when one of them was pulled while holding the other.
-: The decorative materials had a gap in between even by hardly striking the ends of them with a wooden hammer; or cracking occurred in the protrusion or depression; or they did not come together when one of them was pulled while holding the other.

### (Machinability)

Machining was performed to form protrusions and depressions using a tenoner. Then, occurrence of chipping or cracking in the tongues of 20 decorative materials was observed and evaluated based on the following criteria. The results with + or higher were considered acceptable.
++: Almost no cracking or chipping occurred in all the materials.
+: Small cracks or chippings occurred in a very small number of the materials.
-: Cracks or chippings occurred in some (almost all) of the materials.

### (Visibility of gap at the fit part (supposing a gap is present at a joint))

A tongue of one decorative material was fit to a groove of another decorative material. The length of the gap at the fit part (joint) was adjusted to 0.5 mm. The appearance was visually evaluated based on the following criteria. The results of + or higher were considered acceptable.
+++: The gap was not visible.
++: The gap was barely visible with careful watching.
+: The gap was a little visible but at an acceptable level.
-: The gap was noticeable.

### (Example 1)

As illustrated in Fig. 4(a) and Fig. 4(b), a colored polypropylene resin film (thickness: 60 µm, color: white) prepared as a substrate sheet 171 was subjected to gravure printing with ink compositions (acrylic urethane-based compositions) to form thereon a picture pattern layer 172 with marble patterns having a thickness of 2 µm.

Then, a 2-µm-thick adhesive layer 173 formed of an urethane-based adhesive for dry lamination was formed on the picture pattern layer 172, and then a transparent resin layer 174 as a transparent polypropylene resin film (thickness: 80 µm) was formed on the adhesive layer 173 by dry lamination.

Next, a 1-µm-thick primer layer 175 was formed using a two-component curable urethane resin on the transparent polypropylene resin film (transparent resin layer 174). To the primer layer 175 was applied an electron beam curable resin composition (acrylate base) at an amount of 15 g/m² by gravure printing to form a coating film. The coating film was irradiated with electron beam so that the coating film was crosslinked and cured, thereby forming a surface-protecting layer 176 (thickness: 15 µm). Thereafter, an emboss pattern was applied to the surface-protecting layer 176 to form a decorative sheet 17 (thickness: 160 µm) as a decorated layer.

Separately, an ABS resin sheet (thickness: 2.7 mm) was prepared as a substrate layer 11. The substrate layer was faced with the colored polypropylene resin film (substrate sheet 171) of the decorative sheet 17, and they were attached by dry lamination with the urethane-based adhesive for dry lamination 14 interposed therebetween.

Next, a tongue and a groove were formed in the substrate layer 11 of the attached article using a tenoner, thereby providing a tongue/groove configuration (tongue 12 and groove 13). Accordingly, a decorative material 10 was produced.

In the substrate layer 11 of the decorative material 10, the distance from the upper face to an upper-side base 15 of the tongue 12 was 0.9 mm. The thickness of the tongue 12 at its end was 0.9 mm. The ratio of the thickness of the tongue 12 at its end to the thickness at its base was 75%. Only the upper face of the tongue was inclined at an angle of 10°. The decorative material 10 was evaluated based on the above-mentioned standards.

### (Example 2)

As illustrated in Fig. 6, a decorative material was produced as in Example 1, except that a substrate layer 61 had a thickness of 12 mm; the distance from the upper face of the substrate layer 61 to the upper-side base of a tongue 62 was 2.0 mm; and the tongue 62 had a thickness of 3.0 mm at its end.

The decorative material was evaluated based on the above-mentioned standards.

### (Example 3)

A decorative material was produced as in Example 1, except that the distance from the upper face of the substrate layer to the upper-side base of a tongue was 1.5 mm; the tongue 12 had a thickness of 2.3 mm at its end; and the substrate was MDF (thickness: 5.0 mm).

The decorative material was evaluated based on the above-mentioned standards.

### (Example 4)

A decorative material was produced as in Example 1, except that the tongue 12 had a thickness of 1.2 mm at its end; and the ratio of the thickness of the tongue at its end to the thickness at its base was 100%.

The decorative material was evaluated based on the above-mentioned standards.

### (Example 5)

A decorative material was produced as in Example 1, except that the distance from the upper face of the substrate layer to the upper-side base of a tongue was 0.8 mm; the tongue 12 had a thickness of 0.5 mm at its end; and the ratio of the thickness of the tongue at its end to the thickness at its base was 35%.

The decorative material was evaluated based on the above-mentioned standards.

### (Example 6)

A decorative material was produced as in Example 5, except that the material of the substrate layer was changed from ABS to polypropylene (PP).

The decorative material was evaluated based on the above-mentioned standards.

### (Comparative Example 1)

A decorative material was produced as in Example 1, except that the substrate layer used was a 12 mm-thick plyboard; the distance from the upper face of the substrate layer to the upper-side base of a tongue was 4.0 mm; the tongue 12 had a thickness of 2.0 mm at its end; and the ratio of the thickness of the tongue at its end to the thickness at its base was 50%.

The decorative material was evaluated based on the above-mentioned standards.

**[Table 1]**

| | Example 1 | Example 2 | Example 3 | Example 4 | Example 5 | Example 6 | Comparative Example 1 |
|---|---|---|---|---|---|---|---|
| Distance to base (mm) | 0.9 | 2.0 | 1.5 | 0.9 | 0.8 | 0.8 | 4.0 |
| Thickness of substrate (mm) | 2.7 | 12 | 5.0 | 2.7 | 2.7 | 2.7 | 12 |
| Thickness of end of tongue (mm) | 0.9 | 3.0 | 2.3 | 1.2 | 0.5 | 0.5 | 2.0 |
| Tongue/End thickness ratio | 75% | 75% | 75% | 100% | 35% | 35% | 50% |
| Material of substrate | ABS | ABS | MDF | ABS | ABS | PP | plyboard |
| Dirt accumulation | +++ | ++ | +++ | +++ | +++ | +++ | + |
| Visibility of gap at fit part | +++ | ++ | ++ | +++ | +++ | +++ | + |
| Machinability (cracking, chipping) | ++ | ++ | ++ | ++ | + | + | ++ |
| Fittability | +++ | +++ | +++ | + | +++ | +++ | +++ |

The decorative materials in the examples each had the specific tongue and groove in the substrate layer. The decorative materials had a shallow joint between one decorative material and another, and were less susceptible to dirt accumulation and were easy to clean.

The decorative materials in Examples 1 to 3 were evaluated as excellent in all the dirt accumulation, visibility of gap at the fit part, machinability, and fittability. The decorative material in Example 4 was evaluated as excellent in the dirt accumulation, visibility of gap at the fit part, and machinability, but was inferior in the fittability due to the ratio of the thickness of the tongue at its end to the thickness at its base of 100%. The decorative materials in Examples 5 and 6 were evaluated as excellent in the dirt accumulation, visibility of gap at the fit part, and fittability, but was inferior in the machinability due to the tongue having a rather thin end of 0.5 mm and a small ratio of the thickness at its end to the thickness at its base of 35%.

In contrast, the decorative material in Comparative Example 1 in which the distance between the upper face to the upper-side base of the tongue was large had a deep joint between one decorative material and another. Dirt easily accumulated in the joint and was difficult to clean. The decorative material was also inferior in the visibility of gap at the fit part.

### INDUSTRIAL APPLICABILITY

The decorative materials of the present invention fit to one another have a shallow joint between them. Thus, they are less susceptible to dirt accumulation and easy to clean. The decorative materials of the present invention are ideally used for housing materials such as flooring materials, window sides of bay windows, wall surfaces, and ceiling.

### REFERENCE SIGNS LIST

- 10, 60, 100, 110: decorative material
- 11, 61, 101, 111: substrate layer
- 12, 20a to 20d, 62, 102, 112: tongue
- 13, 63, 103, 113: groove
- 14: adhesive
- 15: upper-side base
- 16: lower-side base
- 17,: 600 decorative sheet
- 18: support layer
- 30a to 30d: end
- 171: substrate sheet
- 172: picture pattern layer
- 173: adhesive layer
- 174: transparent resin layer
- 175: primer layer
- 176: surface-protecting layer
- 70: substrate layer
- 71a: protrusion
- 71: tongue
- 72a: groove-like depression
- 72: groove

## Claims

1. A decorative material (10) comprising a polygonal substrate layer (11),
the substrate layer having a protruded tongue (12) at least on its one side face and a depressed groove at least on one of the other side faces, the groove having a shape fittable to the tongue,
the substrate layer (11) having a distance of 2.0 mm or less from its upper face to an upper-side base (15) of the tongue (12),
wherein both the upper face and the opposing lower face of the tongue (12) are inclined, **characterized in that** the angle of inclination of the upper face is larger than the angle of inclination of the lower face.

2. The decorative material (10) according to claim 1, wherein the substrate layer (11) is a single layer.

3. The decorative material (10) according to claim 1 or 2, wherein the substrate layer (11) has a thickness of 5.0 mm or less.

4. The decorative material (10) according to claim 3, wherein the substrate layer (11) has a thickness of not less than 2.0 mm but less than 3.0 mm.

5. The decorative material (10) according to claim 1, 2, 3, or 4, wherein the tongue (12) has a thickness of 0.5 mm or more at its end.

6. The decorative material according (10) to claim 1, 2, 3, 4, or 5, wherein the thickness of the tongue (12) at its end is not less than 30% but not more than 90% of the thickness at its base.

7. The decorative material (10) according to claim 1, 2, 3, 4, 5, or 6, wherein the decorative material (10) comprises a decorated layer on the upper face side of the substrate layer (11).

8. The decorative material (10) according to claim 7, wherein the decorated layer is a decorative sheet (17).

9. The decorative material (10) according to claim 1, 2, 3, 4, 5, 6, 7, or 8, wherein the decorative material (10) includes a support layer (18) on the back side of the substrate layer.

## Patentansprüche

1. Dekoratives Material (10), umfassend eine polygonale Substratschicht (11),
wobei die Substratschicht mindestens auf ihrer einen Seitenfläche eine vorstehende Zunge (12) und mindestens auf einer der anderen Seitenflächen eine vertiefte Rille aufweist, wobei die Rille eine an die Zunge anpassbare Form aufweist,
wobei die Substratschicht (11) einen Abstand von 2,0 mm oder weniger von ihrer oberen Fläche zu einer oberseitigen Basis (15) der Zunge (12) aufweist,
wobei sowohl die obere Fläche als auch die gegenüberliegende untere Fläche der Zunge (12) geneigt sind, **dadurch gekennzeichnet, dass** der Neigungswinkel der oberen Fläche größer ist als der Neigungswinkel der unteren Fläche.

2. Dekoratives Material (10) nach Anspruch 1, wobei die Substratschicht (11) eine einzige Schicht ist.

3. Dekoratives Material (10) nach Anspruch 1 oder 2, wobei die Substratschicht (11) eine Dicke von 5,0 mm oder weniger aufweist.

4. Dekoratives Material (10) nach Anspruch 3, wobei die Substratschicht (11) eine Dicke von nicht weniger als 2,0 mm, aber weniger als 3,0 mm aufweist.

5. Dekoratives Material (10) nach Anspruch 1, 2, 3 oder 4, wobei die Zunge (12) an ihrem Ende eine Dicke von 0,5 mm oder mehr aufweist.

6. Dekoratives Material (10) nach Anspruch 1, 2, 3, 4 oder 5, wobei die Dicke der Zunge (12) an ihrem Ende nicht weniger als 30 %, aber nicht mehr als 90 % der Dicke an ihrer Basis beträgt.

7. Dekoratives Material (10) nach Anspruch 1, 2, 3, 4, 5 oder 6, wobei das dekorative Material (10) eine dekorierte Schicht auf der oberen Fläche der Substratschicht (11) umfasst.

8. Dekoratives Material (10) nach Anspruch 7, wobei die dekorierte Schicht ein dekoratives Blatt (17) ist.

9. Dekoratives Material (10) nach Anspruch 1, 2, 3, 4, 5, 6, 7 oder 8, wobei das dekorative Material (10) eine Trägerschicht (18) auf der rückwärtigen Fläche der Substratschicht aufweist.

## Revendications

1. Matériau décoratif (10) comprenant une couche de substrat polygonale (11), la couche de substrat ayant une languette saillante (12) au moins sur une de ses faces latérales et une rainure creusée au moins sur une des autres faces latérales,
la rainure ayant une forme pouvant s'ajuster à la languette,
la couche de substrat (11) ayant une distance de 2,0 mm ou moins de sa face supérieure à une base côté supérieur (15) de la languette (12),
dans lequel la face supérieure et la face inférieure opposée de la languette (12) sont toutes deux inclinées, **caractérisé en ce que**
l'angle d'inclinaison de la face supérieure est supérieur à l'angle d'inclinaison de la face inférieure.

2. Matériau décoratif (10) selon la revendication 1,
dans lequel la couche de substrat (11) est une couche unique.

3. Matériau décoratif (10) selon la revendication 1 ou 2,
dans lequel la couche de substrat (11) a une épaisseur de 5,0 mm ou moins.

4. Matériau décoratif (10) selon la revendication 3,
dans lequel la couche de substrat (11) a une épaisseur de pas moins de 2,0 mm mais moins de 3,0 mm

5. Matériau décoratif (10) selon la revendication 1, 2, 3 ou 4,
dans lequel la languette (12) a une épaisseur de 0,5 mm ou plus à son extrémité.

6. Matériau décoratif (10) selon la revendication 1, 2, 3, 4 ou 5,
dans lequel l'épaisseur de la languette (12) à son extrémité n'est pas moins de 30 % mais pas plus de 90 % de l'épaisseur à sa base.

7. Matériau décoratif (10) selon la revendication 1, 2, 3, 4, 5 ou 6,
dans lequel le matériau décoratif (10) comprend une couche décorée sur le côté de face supérieure de la couche de substrat (11).

8. Matériau décoratif (10) selon la revendication 7,
dans lequel la couche décorée est une feuille décorative (17).

9. Matériau décoratif (10) selon la revendication 1, 2, 3, 4, 5, 6, 7 ou 8,
dans lequel le matériau décoratif (10) inclut une couche de support (18) sur le côté arrière de la couche de substrat.
